# EUROPÄISCHE PATENTSCHRIFT

(11) **EP 1 473 203 B1**
(45) Veröffentlichungstag und Bekanntmachung des Hinweises auf die Patenterteilung: **02.03.2011**
(21) Anmeldenummer: 04101485.3
(22) Anmeldetag: 13.04.2004
(51) Int. Cl.: B60T 8/00, B60T 13/66

(54) **Gezogenes Gerät für den Strassen- und Geländebetrieb**
towed vehicle for on- and off-road use
véhicule remorqué utilisable sur route et hors route

(30) Priorität: 29.04.2003 DE 10319184
(43) Veröffentlichungstag der Anmeldung: 03.11.2004
(73) Patentinhaber: DEERE & COMPANY, Moline, Illinois 61265-8098 (US)
(72) Erfinder: Ponet, Cyrille, 70700, GY (FR); Viaud, Jean, 70100, Gray (FR); Chapon, Emmanuel, 70100, Champvans (FR)
(74) Vertreter: Magin, Ludwig Bernhard

(56) Entgegenhaltungen:
- DE-A- 2 718 969
- DE-A- 10 049 526
- DE-A- 19 600 734
- DE-A- 19 943 541
- DE-U- 29 920 285

## Beschreibung

Die Erfindung betrifft ein gezogenes Gerät für den Straßen- und Geländebetrieb mit einer Stellvorrichtung für eine Bremsvorrichtung und mit wenigstens einem Sensor zur Erfassung wenigstens eines Betriebszustandes des Geräts.

Es ist bekannt, schwere gezogene Geräte, z.B. in der Landwirtschaft, mit einem eigenen Bremssystem zu versehen und die Räder z.B. mit Druckluft oder hydraulisch zu bremsen, siehe z.B. BIG PACK von KRONE, Druckvermerk: VDV - Big Pack-10304 - 10' - 10.99.

Die DE 196 00 734 A und die DE 199 43 541 A offenbart ein Verfahren zur Steuerung von Aggregaten und/oder Systemen eines Kraftfahrzeuges, bei denen es sich z.B. um ein Getriebe, ABS, Lenkung, etc, handeln kann. Diese Aggegrate werden abhängig von Signalen gesteuert, die mittels Sensoren ermittelt werden. Diese Lösungen sind nicht für Gespanne bestimmt.

Aus der DE 299 20 285 geht ein gezogenes Gerät für den Straßen- und Geländebetrieb hervor mit einer Stellvorrichtung für eine Bremsvorrichtung und mit wenigstens einem Sensor zur Erfassung wenigstens eines Betriebszustandes sowie mit einer Steuervorrichtung, das an eine Zugmaschine angehängt werden kann. Es wird dort als Problem blockieren und dadurch die Bremsen dieses Anhängers die Räder blockieren und dadurch die Grasnarbe beschädigen oder sonstige Probleme verursachen können. Als Lösung wird eine Regelung der Bremskraft des Anhängers vorgeschlagen, die in einem bestimmten Verhältnis zu der der zugmaschine gehalten werden soll. Nachteilig ist hier, daß diese Bremskraft bei unterschiedlichen Bodenbelägen zu unterschiedlichem Bremsverhalten führt.

Das der Erfindung zugrunde liegende Problem wird darin gesehen, dass beim Bremsen mittels einer zum Bremsen auf der Straße ausgelegten bremsvorrichtung auf dem Feld die Grasnarbe beschädigt werden kann oder das schwere Gerät beim Bremsen ausbricht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die Kraft zum Bremsen und damit auch der Zeitpunkt, zu dem die Räder blockieren, eingestellt werden, wobei insbesondere dann, wenn der Sensor erkennt, dass sich das Gerät im Betrieb befindet, davon ausgegangen werden kann, dass es sich im Feldeinsatz befindet, wo die vorgenannten Probleme bestehen. In diesem Fall ist es auch nicht erforderlich, eine hohe Bremskraft anzulegen, weil sich selten weitere Verkehrsteilnehmer auf dem Feld befinden und weil bei dem Betrieb nur mit einer geringen Geschwindigkeit gefahren wird. Bei dem Gerät kann es sich um eine Presse, einen Feldhäcksler, eine Spritze, ein Mähgerät, einen Vollernter, ein Sägerät oder jedes andere Gerät in der Land- oder Forstwirtschaft handeln. Die Bremsvorrichtung kann sowohl hydraulisch als auch pneumatisch betrieben werden. Es wäre auch eine mechanische Betätigung denkbar, z. B. aufgrund des Schubs auf die Deichsel - in diesem Fall müsste ein Übersetzungsverhältnis der Schubkraft in die Bremskraft verändert werden. Wie im Weiteren noch erläutert wird, kann der Betriebszustand auf verschiedene Weise erfasst werden, zumal bei heutigen Maschinen ohnehin eine Vielzahl von Betriebsparametern standardmäßig in vorhandenen Steuervorrichtungen erfasst wird. Wesentlich ist, dass erkannt wird, dass sich das Gerät nicht auf der Straße befinden kann, weil es sich nämlich im Betrieb befindet. Desgleichen kommt eine Vielzahl von Bauarten für den bzw. die Sensoren in Betracht - berührende, verstellbare, berührungslose u.s.w.. In der einfachsten Bauart handelt es sich um Schalter, die lediglich ein Ein/Aus-Signal liefern. In höher entwickelten Ausführungsformen werden Sensoren benutzt, die auch qualitativ unterschiedliche Werte, also unterschiedlich starke Signale liefern.

Es ist zwar z. B. aus der JP2002240700 A bekannt, bei einem Ackerschlepper die Bremskraftunterstützung in Abhängigkeit von einer bestimmten Getriebesituation zu verändern - hier kann das Problem beim Abbremsen eines Gespanns aber nicht auftreten.

Darüber hinaus ist auch die Verwendung von Antiblockiersystemen in Kraftfahrzeugen weithin bekannt; solche Systeme sind wegen ihrer Komplexität im rauhen landwirtschaftlichen Betrieb und wegen ihrer Kosten bei den geringen Stückzahlen bei landwirtschaftlichen Maschinen nicht anwendbar.

Zwar könnte ein Sensor z. B. in einer analogen Schaltung auch direkt auf die Stellvorrichtung wirken und diese betätigen; aber insbesondere dann, wenn nicht eine Ein/Aus-Steuerung, sondern eine graduell angepasste Steuerung oder Regelung erfolgen soll, oder wenn die Signale mehrerer Sensoren miteinander verknüpft werden sollen, ist es von Vorteil, die Stellvorrichtung mittels einer Steuervorrichtung anzusteuern. Die Steuervorrichtung ist sinnvoller Weise als ein Rechner entweder auf dem Gerät oder auf der Zugmaschine ausgebildet. Daneben wäre auch eine rein hardwaremäßige Steuerung sowie eine Steuerung möglich. Die Signalübertragung kann mit üblichen Kabeln, drahtlos aber auch in CAN-Bus-Technik erfolgen. Die Verwendung der Steuervorrichtung macht es zudem möglich, das Signal an die Stellvorrichtung zu verändern, z. B. zu verstärken, zu verringern, zu verzögern etc.

Da die Arbeitsverhältnisse auf dem Gelände abhängig von den Witterungsbedingungen sehr variieren können, z. B. zwischen rutschig, schmierig, glatt und felsig, fester Untergrund oder hügelig und eben, erweist es sich als hilfreich, wenn eine Bedienungsperson manuell auf die Bremskraft einwirken und das zur Stellvorrichtung gelangende Signal verändern kann.

Eine sichere Abnahme eines Betriebssignals durch den Sensor ist möglich, wenn der Sensor die Geschwindigkeit und/oder die Stellung und/oder die Stellkraft von während des Betriebs des Geräts betätigten Komponenten des Geräts erfasst. Z. B. kann die Drehgeschwindigkeit von Mähtellern oder Presswalzen erkannt werden - ist sie null oder sehr niedrig, kann davon ausgegangen werden, dass das Gerät ausgeschaltet ist oder wurde. Selbstverständlich kann auch die Fortbewegungsgeschwindigkeit des Geräts als Parameter herangezogen werden. Es ist auch denkbar, die Bremskraft mit steigender Geschwindigkeit zu erhöhen. Als Stellung kann z. B. die einer Pick-up, eines Mähbalkens, eines Schars und dergleichen überwacht werden. Die Stellkraft kann ebenfalls an einem Schar einer Sämaschine, eines Pfluges oder dergleichen abgenommen werden.

Um bei einem Gespann stets eine gestreckte Lage zu erhalten und das Verhalten des ziehenden und des gezogenen Fahrzeugs aufeinander abzustimmen, ist es unter Umständen hilfreich, auch Fahrzustände des ziehenden Fahrzeugs, z. B. eines Ackerschleppers, zu erfassen und in die Signalbildung einzubeziehen.

Insgesamt kann sowohl eine Steuerung als auch eine Regelung zum Anpassen der Bremskraft vorgenommen werden.

In der Zeichnung ist ein nachfolgend näher beschriebenes Aus - führungsbeispiel der Erfindung dargestellt. Es zeigt:

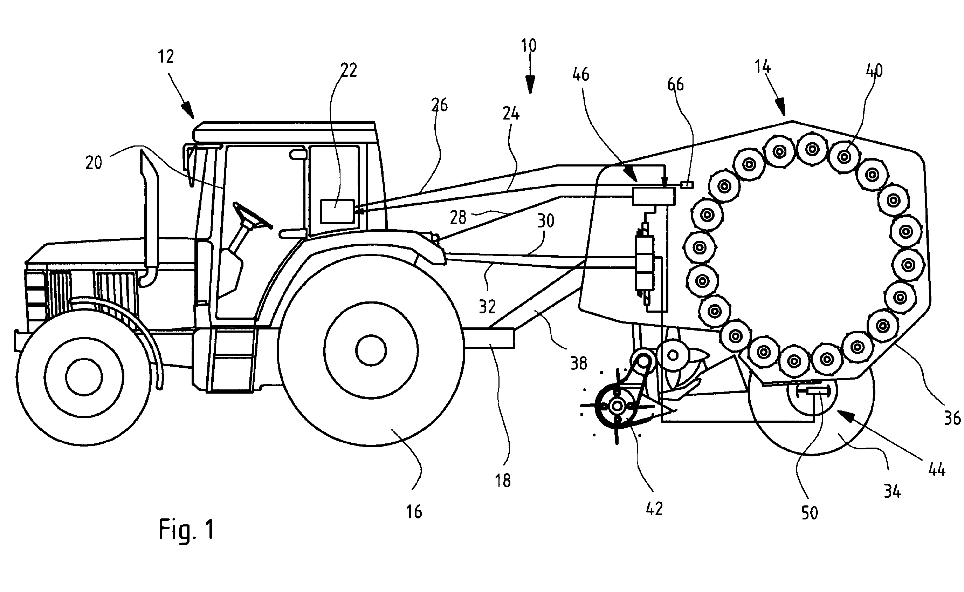

- Fig. 1: ein Gespann aus einem ackerschlepper und einem landwirtschaftlichen gezogenen Gerät, das mit einer erfindungsgemäßen Stellvorrichtung für eine Bremsvorrichtung versehen ist und

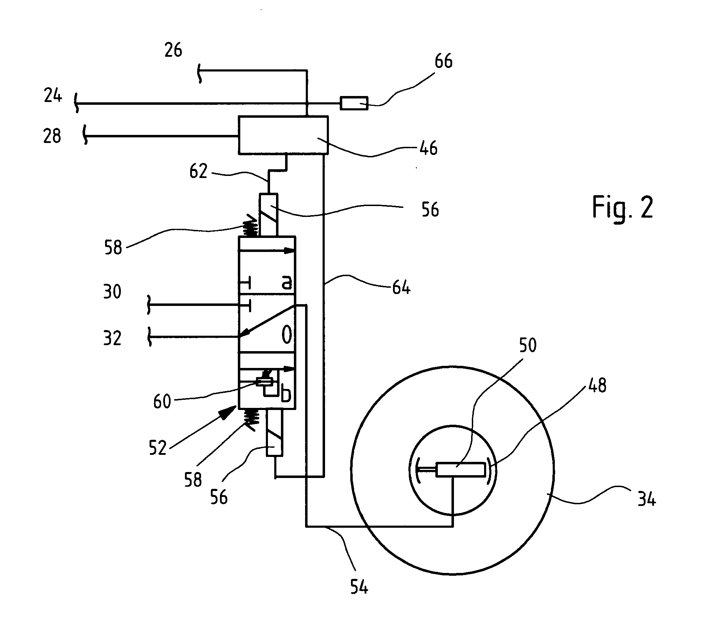

- Fig. 2: die Stellvorrichtung für eine Bremsvorrichtung in schematischer Darstellung.

Ein in der Zeichnung gezeigtes Gespann 10 setzt sich aus einem Zugfahrzeug 12 in der Art eines herkömmlichen Ackerschleppers und aus einem gezogenen landwirtschaftlichen Gerät 14 in diesem speziellen Ausführungsbeispiel in der Art einer Rundballenpresse zusammen.

Das Zugfahrzeug 12 weist abbr emsbare Räder 16, eine Anhängerkupplung 18, eine Fahrerkabine 20 und nicht gezeigte Vorrichtungen zum Bereitstellen von elektrischer und hydraulischer oder pneumatischer Energie auf. Zur steuerungs - oder regelungsmäßigen Verbindung des Zugfahrzeugs 12 mit dem Gerät 14 ist eine Bedieneinheit 22 im Bereich der Fahrerkabine 20 vorgesehen, und es verlaufen eine Eingangssignalleitung 24, eine Ausgangssignalleitung 26, eine Stromleitung 28, eine Druckleitung 30 und eine Rücklaufleitung 32 zwischen dem Zugfahrzeu g 12 und dem Gerät 14. Die Bedieneinheit 22 kann sowohl dazu dienen, von einer Bedienungsperson Einstellungen anzunehmen, als auch um Signal zu erhalten, errechnen, anzeigen, ausgeben etc.

Das gezeigte Gerät 14 steht stellvertretend für die Vielzahl möglicher Geräte, wie sie eingangs genannt worden sind und sowohl im Gelände bzw. Feld, als auch auf der Straße betrieben bzw. gefahren werden können. Da es kaum auf die Ausführung des Geräts 14 im einzelnen ankommt, werden nur die Kompon enten beschrieben, die für die Erfindung brauchbar sind. Das Gerät 14 weist hierzu Räder 34, ein Fahrgestell 36, eine Deichsel 38, eine Pressvorrichtung 40, einen Gutaufnehmer 42, eine Bremsvorrichtung 44 und eine Steuervorrichtung 46 auf.

Die Räder 34 werden üblicherweise nicht angetrieben, können aber mittels der Bremsvorrichtung 44 abgebremst werden, wie dies später erklärt wird.

Das Fahrgestell 36 wird von den Rädern 34 getragen und mittels der Deichsel 38 an die Anhängekupplung 18 des Zugfahrzeugs 12 angeschlossen.

Die Pressvorrichtung 40 enthält Rollen, die während des Betriebs des Geräts 14 in Drehung versetzt werden.

Der Gutaufnehmer 42 ist in der Höhe verstellbar und antreibbar, wobei er während der Fahrt auf der Straße einen angehobenen und nicht angetriebenen Zustand einnimmt.

Die Pressvorrichtung 40 und der Gutaufnehmer 42 stehen stellvertretend für Komponenten, an denen abgelesen wird, ob sich das Gerät 14 in Betrieb befindet oder nicht.

Die Bremsvorrichtung 44 enthält eine oder mehrere auf die Räder 34 wirkende Bremsen 48, die mittels einer Stellvorrichtung 50 betätigt werden. Die Stellvorrichtung 50 ist als ein einfachwirkender Stellmotor, insbesondere Hydraulikzylinder, ausgebildet und erhält Druckflüssigkeit bzw. kann sie entweichen lassen über ein Ventil 52 und eine Leitung 54.

Das Ventil 52 kann drei unterschiedliche Stellungen 0, a und b einnehmen, wobei es in die Stellungen a und b mittels zweier steuerbarer Elektromagneten 56 und in die mittige Stellung 0 mittels zweier Federn 58 bei nicht aktivierten Elektromagneten 56 gebracht wird. Auf der Seite der Bremse 48 ist in jeder Stellung des Ventils 52 nur ein Anschluss vorgesehen; auf der gegenüberliegenden Seite ist ein Anschluss für die Druckleitung 30 und für die Rücklaufleitung 32 vorgesehen. Die Druckleitung 30 und die Rücklaufleitung 32 sind mit einem nicht gezeigten Bremssystem auf dem Zugfahrzeug 12 verbunden, so dass nur dann Druck ansteht bzw. abgelassen werden kann, wenn auch das Bremssystem auf dem Zugfahrzeug 12 betätigt wird. In der Stellung 0 ist die Stellvorrichtung 50 nur mit der Rücklaufleitung 32 und diese mit einem nicht gezeigten Vorratsbehälter verbunden, weshalb die Bremse 48 nicht betätigt wird. In der Stellung a wird eine direkte Verbindung zwischen der Druckleitung 30 und der Stellvorrichtung 50 geschaffen, so dass die Bremse 48 mit dem Druck in der Druckleitung 30 beaufschlagt und angelegt wird.

In der Stellung b hingegen ist die Druckleitung 30 über ein einstellbares Druckregelventil 60 mit der Rücklaufleitung 32 verbunden, so dass der an der Stellvorrichtung 50 anliegende Druck nicht dem in der Druckleitung 30 herrschenden, sondern dem von dem Druckregelventil 60 vorgegebenen Druck entspricht.

Die Steuervorrichtung 46 ist eingangsseitig mit der Stromleitung 28 und der Ausgangssignalleitung 26 und ausgangsseitig mit einer Voll-Brems-Signalleitung 62 und einer Teil-Brems-Signalleitung 64 verbunden. Während der Anschluss der Stromleitung 28 lediglich dem Betrieb der Steuervorrichtung 46 dient, erhält sie über die Ausgangssignalleitung 26 Signale von der Bedieneinheit 22. Solche Signale können sowohl von einem Sensor 66 herrühren, der erkennt, ob die Pressvorrichtung 40 und/oder der Gutaufnehmer 42 in Betrieb sind oder nicht, mithin ob das Gerät 14 auf der Straße gefahren werden kann oder wegen des Betriebs nur auf dem Feld. Ferner kann mit der Bedieneinheit 22 auch manuell oder automatisch Einfluss auf das in der Steuervorrichtung 46 gebildete Signal hinsichtlich seiner Größe, seiner Geschwindigkeit oder dergleichen genommen werden. Grundsätzlich könnte der Sensor 66 auch direkt an die Steuervorrichtung 46 oder gar das Ventil 52 angeschlossen werden; da aber für andere Zwecke ohnehin regelmäßig eine Verbindung zwischen dem Sensor 66 und der Bedieneinheit 22 besteht, wird zweckmäßigerweise auf diese zurückgegriffen. Jedenfalls bildet die Steuervorrichtung 46 ein Signal, aufgrunddessen das Ventil 52 eine seiner Stellungen 0, a und b einnimmt.

Nach alledem ergibt sich folgende Funktion.

Sobald das Gespann 10 auf der Straße fährt, stellt der Sensor 66 fest, dass das Gerät 14 nicht betrieben wird, denn die Pressvorrichtung 40 und/oder der Gutaufnehmer 42 sind nicht in Betrieb, d. h. stehen geblieben. In der Steuervorrichtung 46 wird daher ein Signal gebildet und ausgesandt, das das Ventil 52 mittels des von der Voll-Brems-Signalleitung gespeisten Elektromagneten 56 in die Stellung a bewegt. Sobald die Bremsvorrichtung des Zugfahrzeugs 12 betätigt wird, kann der gesamte Druck an der Stellvorrichtung 50 und somit an der Bremse 48 anliegen. Die Räder 34 werden mit der größtmöglichen Energie bei der Fahrt auf der Straße abgebremst.

Wird hingegen von dem Sensor 66 festgestellt, dass sich das Gerät 14 in Betrieb befindet, weil z. B. der Gutaufnehmer 42 umläuft, wird davon ausgegangen, dass sich das Gerät 14 in dem Gelände befindet, so dass eine hohe Bremskraft weder erforderlich noch erwünscht ist. In diesem Fall wird die Steuervorrichtung 46 das Ventil 52 in seine Stellung b verschieben, in der ein Teil des Drucks über das Druckregelventil 60 abgebaut wird, wenn die Bremsvorrichtung des Zugfahrzeugs 12 betätigt wird. Die Räder 34 werden bei diesem reduzierten Druck nicht blockieren und wegrutschen - jedenfalls nicht so stark oder so schnell, wie wenn der volle Druck anliegt. Sofern das Druckegelventil 60 verstellbar ist und von der Steuervorrichtung 46 z. B. mittels einer Leitung 68 ein Signal erhalten kann, ist es auch möglich, die Einstellung des Druckregelventils 60 zu verändern und somit den Bremsdruck zu erhöhen oder abzusenken.

Das Hydrauliksystem, wie auch die Art der Steuerung des Drucks an der Stellvorrichtung 50 sind beliebig ausführbar - auf die Ausführung in dem einzigen Ausführungsbeispiel kommt es daher nicht unbedingt an.

## Patentansprüche

1. Gezogenes Gerät (14) für den Straßen- und Geländebetrieb mit einer Stellvorrichtung (50) für eine Bremsvorrichtung (44) und mit wenigstens einem Sensor (66) zur Erfassung wenigstens eines Betriebszustandes des Geräts (14), der geeignet ist, ein Signal zu liefern, aus dem sich ergibt, daß sich das Gerät (14) nicht im Straßenbetrieb befindet, wobei eine Steuervorrichtung (46) vorgesehen ist, die geeignet ist, die Stellkraft der Stellvorrichtung (50) in Abhängigkeit von dem Signal des Sensors (66) zu verändern.

2. Gezogenes Gerät nach Anspruch 1, **dadurch gekennzeichnet, dass** die Stellkraft der Stellvorrichtung (50) im Straßen- und/oder Geländebetrieb manuell einstellbar ist.

3. Gezogenes Gerät nach Anspruch 1 oder 2, **dadurch gekennzeichnet, dass** der Sensor (66) die Geschwindigkeit und/oder die Stellung und/oder die Stellkraft von während des Betriebs des Geräts (14) betätigten Komponenten des Geräts (14) erfasst.

4. Gezogenes Gerät nach einem oder mehreren der vorherigen Ansprüche, **dadurch gekennzeichnet, dass** mittels eines weiteren Sensors der Betrieb und/oder Fahrzustand eines das Gerät (14) ziehenden Zugfahrzeugs (12) erfasst wird.

## Claims

1. Towed implement (14) for on-road use and off-road use, having an actuating device (50) for a brake device (44) and having at least one sensor (66) for sensing at least one operating state of the implement (14), which sensor is suitable for supplying a signal from which it becomes apparent that the implement (14) is not in on-road use, a control device (46) being provided which is suitable for changing the actuating force of the actuating device (50) as a function of the signal of the sensor (66).

2. Towed implement according to Claim 1, **characterized in that** the actuating force of the actuating device (50) can be adjusted manually during on-road use and/or off-road use.

3. Towed implement according to Claim 1 or 2, **characterized in that** the sensor (66) senses the speed and/or the position and/or the actuating force of components of the implement (14) which are activated while the implement (14) is operating.

4. Towed implement according to one or more of the preceding claims, **characterized in that** the operating mode and/or driving state of a towing vehicle (12) which is towing the implement (14) is sensed by means of a further sensor.

## Revendications

1. Engin remorqué (14) utilisable sur route et hors route, comprenant un dispositif de réglage (50) pour un dispositif de freinage (44) et au moins un capteur (66) pour détecter au moins un état de fonctionnement de l'engin (14), qui est approprié pour fournir un signal qui indique que l'engin (14) n'est pas utilisé sur route, un dispositif de commande (46) étant prévu, lequel est approprié pour modifier la force de réglage du dispositif de réglage (50) en fonction du signal du capteur (66).

2. Engin remorqué selon la revendication 1, **caractérisé en ce que** la force de réglage du dispositif de réglage (50) lors de l'utilisation sur route et hors route est ajustable manuellement.

3. Engin remorqué selon la revendication 1 ou 2, **caractérisé en ce que** le capteur (66) détecte la vitesse et/ou la position et/ou la force de réglage de composants de l'engin (14) actionnés pendant l'utilisation de l'engin (14).

4. Engin remorqué selon l'une quelconque ou plusieurs des revendications précédentes, **caractérisé en ce qu'**au moyen d'un capteur supplémentaire, le fonctionnement et/ou l'état de conduite d'un véhicule tracteur (12) tirant l'engin (14) est détecté.
